# EUROPEAN PATENT APPLICATION

(11) **EP 3 699 641 A1**
(43) Date of publication of application: **26.08.2020**
(21) Application number: 20159155.9
(22) Date of filing: 24.02.2020
(51) Int. Cl.: G01S 19/15, G05D 1/10, G08G 5/00

(54) **SYSTEM AND METHOD FOR GNSS TO VHF CONVERTED DATA FOR INSTRUMENT LANDING SYSTEM LOOKALIKE**

(30) Priority: 25.02.2019 US 201916284541
(71) Applicant: Honeywell International Inc., Morris Plains, NJ 07950 (US)
(72) Inventor: POPESCU, Michael, Morris Plains, NJ New Jersey 07950 (US); SMITH, Ronald M., Morris Plains, NJ New Jersey 07950 (US); DOYLE, Robert S., Morris Plains, NJ New Jersey 07950 (US); ODEN, Paul, Morris Plains, NJ New Jersey 07950 (US)
(74) Representative: Haseltine Lake Kempner LLP

(57) **Abstract**

A system comprises a GNSS unit onboard an aircraft, with the GNSS unit operative to generate horizontal and vertical deviation signals. An onboard converter unit is in communication with the GNSS unit, and an onboard radio navigation computer is in communication with the converter unit. The converter unit performs a method for converting the deviation signals to equivalent VHF instrument landing system signals. The method comprises receiving the deviation signals; deriving signal modulations based on the deviation signals to produce localizer and glideslope digital signals; converting the localizer digital signals to a VHF localizer analog signal; converting the glideslope digital signals to a VHF glideslope analog signal; optionally performing an integrity check of the VHF localizer and VHF glideslope analog signals; performing high integrity switching between the VHF localizer/glideslope analog signals, and the deviation signals; and outputting the VHF localizer and VHF glideslope analog signals to the radio navigation computer.

## Description

### BACKGROUND

Localizer Precision with Vertical Guidance (LPV) for aircraft operates using lateral and vertical deviation data from a Wide Area Augmentation System (WAAS) capable Global Positioning System (GPS) unit. The GPS unit contains the operational database with all the required approach data including the approach identifier and selection. The GPS data is provided to a radio navigation computer, displays, and flight control systems in the aircraft to establish the proper guidance for a pilot.

In traditional installations, the LPV approach selection is done through a navigator or Flight Management System (FMS). The navigator or FMS provides the corresponding Final Approach Segment (FAS) data block for the selected approach, enabling the GPS unit to provide its approach data and deviation information to other avionics systems, including the FMS when the approach is done through the navigator and the radio navigation system when the approach is done as an Instrument Landing System (ILS) lookalike.

A problem for the traditional legacy ILS Lookalike installations is the update that is required to enable the radio navigation system (originally designed for ILS) to operate using the GPS data, resulting in a costly and extensive impact to the cockpit. This can become prohibitively expensive for aircraft with a comparatively low hull value. To minimize the impact and increase the compatibility of the existing equipment for LPV or ILS Lookalike approaches, it would be beneficial to develop ways to utilize the GPS signal directly without the need to upgrade navigators, radios, or avionics computers.

### SUMMARY

A system comprises a global navigation satellite system (GNSS) unit onboard an aircraft, with the GNSS unit operative to generate horizontal and vertical deviation signals for the aircraft. A converter unit onboard the aircraft is in operative communication with the GNSS unit, and a radio navigation computer onboard the aircraft is in operative communication with the converter unit. The converter unit comprises a processor operative to execute instructions to perform a method for converting the horizontal and vertical deviation signals to equivalent very high frequency (VHF) instrument landing system signals. The method comprises receiving the horizontal and vertical deviation signals from the GNSS unit; deriving signal modulations based on the horizontal and vertical deviation signals to produce localizer digital signals and glideslope digital signals; converting the localizer digital signals to a VHF localizer analog signal; converting the glideslope digital signals to a VHF glideslope analog signal; optionally performing an integrity check of the VHF localizer analog signal; optionally performing an integrity check of the VHF glideslope analog signal; performing high integrity switching between the VHF localizer/glideslope analog signals, and the horizontal and vertical deviation signals; and outputting the VHF localizer analog signal and the VHF glideslope analog signal to the radio navigation computer.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of a cockpit system with a GPS/ILS converter unit, according to one embodiment;
Figure 2 is a block diagram of the converter unit in the system of Figure 1, according to one embodiment;
Figure 3 is a flow diagram of an exemplary method for converting horizontal and vertical deviation signals to equivalent VHF ILS signals; and
Figure 4 is a flow diagram of an exemplary software processing algorithm, providing further details of a method for operating a converter unit that converts horizontal and vertical deviation signals to equivalent VHF ILS signals.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method are described herein that provide Global Navigation Satellite System (GNSS) to Very High Frequency (VHF) converted data for an Instrument Landing System (ILS) lookalike. Specifically, the system and method provide for the conversion of GNSS deviation signals to the VHF equivalent deviations for use in operational aircraft approaches. In addition, a GNSS to VHF conversion application can be implemented with the purpose of re-use of an aircraft's ILS display capability, by using a GNSS deviation data to VHF radio converter with conventional ILS navigation receivers.

The present system and method provide various technical benefits, including allowing for a simplified solution for add-on/retrofit of a Localizer Precision with Vertical Guidance (LPV)/ILS lookalike approach capability for aircraft currently limited to ILS approaches, without radio system changes. This solution can also be applied to systems that do not have a Flight Management System (FMS). The present approach also provides a way to minimize cost and complexity for aftermarket adoption of a precision GNSS approach with existing aircraft installations.

The present approach also allows utilization of third party radio systems for alike functionality as the ILS lookalike signals, once converted, would be industry standard VHF signal used by all radios. This would result in possible new upgrades of older avionics platforms for large airline fleets if these cockpits currently only have an ILS approach capability for instrument flying.

In one implementation, the system and method convert Global Positioning System (GPS) deviations to equivalent VHF ILS glideslope and localizer deviations, and utilize the converted deviations as inputs to an existing radio navigation computer. The conversion can be accomplished using a low cost, small scale converter that can digitally use GPS signals to generate the VHF ILS signals. The synthesized vertical and lateral deviation data enable an ILS lookalike solution for LPV approaches without any radio navigation system or integrated avionics computer updates, minimizing the cost and impact to the existing avionics system. The switching between the localizer/glideslope signals and the VHF converted GPS signals is done through a high integrity switch inside of the converter.

An onboard navigator unit used in the present system can be any type of navigator or Flight Management System (FMS) that can provide the respective GPS approach from a navigation database. In order to choose an LPV approach, the pilot selects this type of approach using a cockpit panel that sends a request to the high integrity switch function inside of the converter.

During an LPV approach, an LPV capable GPS outputs digital horizontal and vertical deviations in the form of ARINC 429 data, for example. To make this data usable by the radio navigation system, these digital signals need to be converted to VHF localizer and glideslope carrier signals with 90 Hz and 150 Hz modulation signals to convey the left/right high/low deviation data into the existing legacy ILS display. The conversion is therefore a digital to analog type of conversion, and to check the integrity of the result, the analog output needs to be re-digitized as a check on the output signal.

Further details of various embodiments are described hereafter with reference to the drawings.

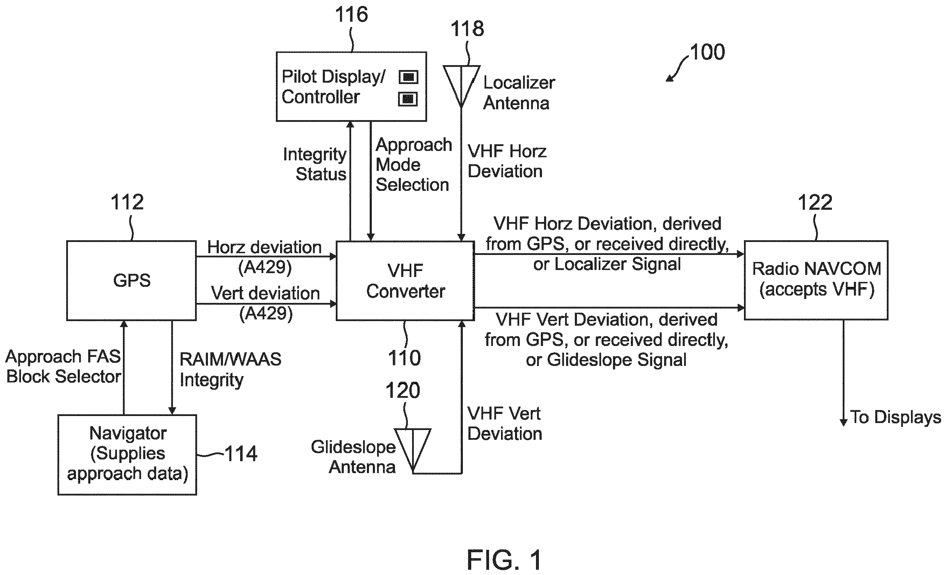

Figure 1 is a block diagram of a cockpit system 100 for an aircraft, which includes an onboard GPS/ILS VHF converter unit 110, according to one embodiment. The system 100 also includes an onboard GPS unit 112 operative to generate digital horizontal and vertical deviation signals for the aircraft. An onboard navigator unit 114 is in operative communication with GPS unit 112 and is configured to supply approach data such as a Final Approach Segment (FAS) data block selector to GPS unit 112. The GPS unit 112 provides Receiver Autonomous Integrity Monitoring (RAIM) or Wide Area Augmentation System (WAAS) integrity signals to navigator unit 114.

The converter unit 110 is in operative communication with GPS unit 112 and is configured to receive the digital horizontal and vertical deviation signals (e.g., A429 signals) from GPS unit 112. The converter unit 110 is operative to convert the digital horizontal and vertical deviation signals to equivalent VHF instrument landing system signals such as VHF localizer and glideslope deviation signals. The converter unit 110 can be implemented as a small line replaceable unit (LRU) in system 100. The converter unit 110 is described in further detail hereafter.

A pilot display/controller 116 can be in operative communication with converter unit 110. The pilot display/controller 116 is configured to receive an integrity status for GPS unit 112 from converter unit 110. The pilot display/controller 116 is also configured to send an approach mode selection to converter unit 110.

A localizer antenna 118 and a glideslope antenna 120 can also be operatively coupled to converter unit 110. The localizer antenna 118 provides a VHF horizontal deviation signal from a local source, and glideslope antenna 120 provides a VHF vertical deviation signal from the local source.

An onboard radio navigation computer 122 is in operative communication with converter unit 110, and is configured to receive the VHF horizontal and vertical deviation signals, derived from GPS unit 112, or received directly, from converter unit 110. The radio navigation computer 122 is also configured to receive the localizer signal and glideslope signal from localizer antenna 118 and glideslope antenna 120 through converter unit 110. Navigation information is then output from radio navigation computer 122 to one or more onboard displays.

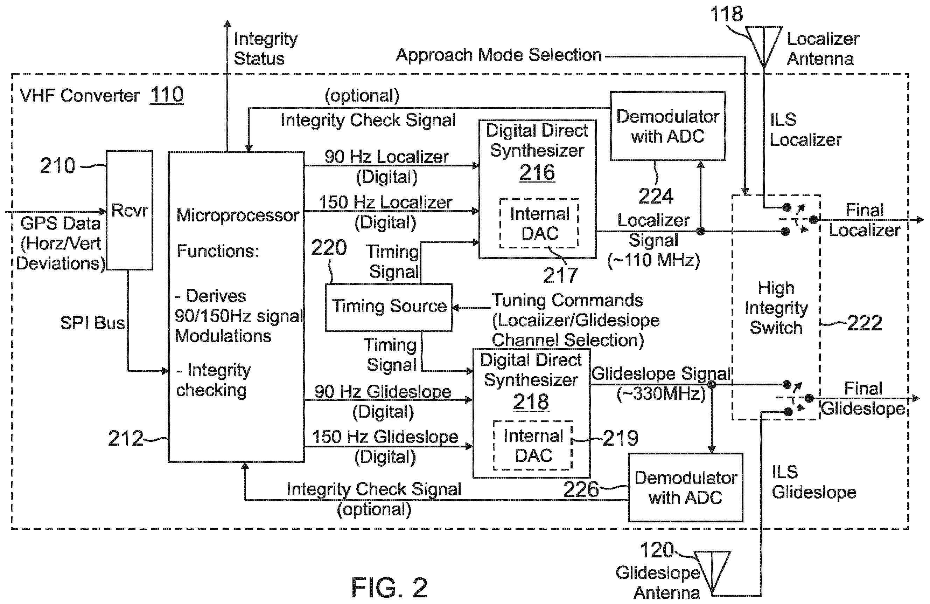

Figure 2 is a block diagram illustrating further details of converter unit 110, according to one embodiment. The converter unit 110 includes a receiver 210 configured to receive GPS data such as digital horizontal and vertical deviation signals from GPS unit 112 (Fig. 1). A processor 212 such as a microprocessor is operative to receive the digital horizontal and vertical deviation signals from receiver 210 through a serial peripheral interface (SPI) bus. The processor 212 is operative to derive signal modulations from the horizontal and vertical deviation signals, such as 90 Hz and 150 Hz modulation signals. The processor 212 is also operative to perform integrity checking of the GPS deviation signals, and output the integrity status, such as to pilot display/controller 116 (Fig. 1).

As shown in Figure 2, a first digital direct synthesizer 216 is operative to receive digital localizer signals output from processor 212, such as 90 Hz and 150 Hz localizer signals. A second digital direct synthesizer 218 is operative to receive digital glideslope signals output from processor 212, such as 90 Hz and 150 Hz glideslope signals. The first and second digital direct synthesizers 216, 218 each respectively include an internal digital to analog converter (DAC) 217, 219.

A timing source 220 is configured to send timing signals to each of digital direct synthesizers 216, 218. The timing source is configured to receive tuning commands, such as localizer/glideslope channel selections. A high integrity switch 222 is operative to receive a localizer signal (e.g., at about 110 MHz) output by digital direct synthesizer 216, and a glideslope signal (e.g., at about 330 MHz) output by digital direct synthesizer 218. The high integrity switch 222 is also operative to receive an ILS localizer signal from localizer antenna 118, and an ILS glideslope signal from glideslope antenna 120. The high integrity switch 222 is also operative to receive an approach mode selection signal, such as from pilot display/controller 116 (Fig. 1). A final localizer signal and a final glideslope signal are output from high integrity switch 222, such as to radio navigation computer 122. (Fig. 1)

As depicted in Figure 2, a first demodulator 224 can be implemented to receive the localizer signal output by first digital direct synthesizer 216. The demodulator 224 has an analog to digital converter (ADC) that converts the localizer signal to a first digital integrity check signal, which can optionally be sent to processor 212 for further processing. A second demodulator 226 can be implemented to receive the glideslope signal output by second digital direct synthesizer 218. The demodulator 226 has an ADC that converts the glideslope signal to a second digital integrity check signal, which can optionally be sent to processor 212 for further processing.

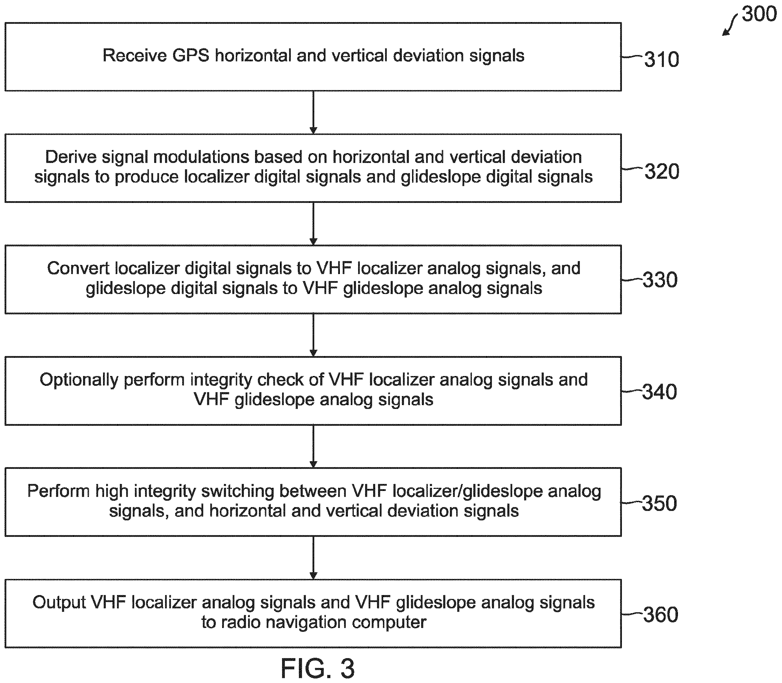

Figure 3 is a flow diagram of an exemplary method 300 for converting horizontal and vertical deviation signals to equivalent VHF ILS signals, which can be performed by a GPS/ILS converter unit, such as converter unit 110. The method 300 comprises receiving GPS horizontal and vertical deviation signals (block 310), and deriving signal modulations based on the horizontal and vertical deviation signals to produce localizer digital signals and glideslope digital signals (block 320). The method 300 converts the localizer digital signals to VHF localizer analog signals, and converts the glideslope digital signals to VHF glideslope analog signals (block 330). The method 300 can then optionally perform an integrity check of the VHF localizer analog signals, and can optionally perform an integrity check of the VHF glideslope analog signals (block 340). High integrity switching between the VHF localizer/glideslope analog signals, and the horizontal and vertical deviation signals, is then performed (block 350). The VHF localizer analog signals and the VHF glideslope analog signals are then output to a radio navigation computer (block 360).

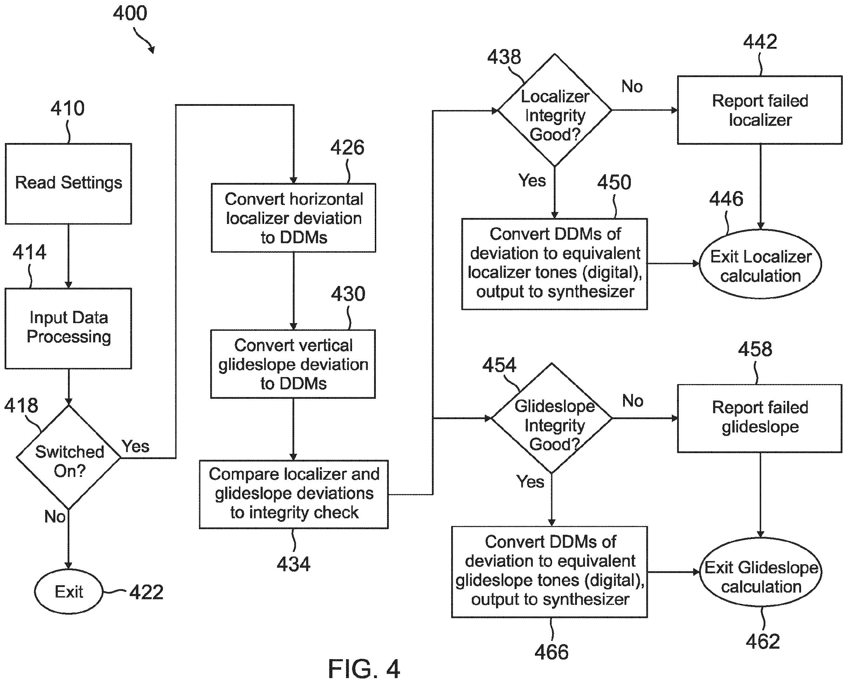

Figure 4 is a flow diagram of an exemplary software processing algorithm 400, providing further details of a method for operating a converter unit that converts horizontal and vertical deviation signals to equivalent VHF ILS signals. The algorithm 400 initially performs a read settings function (block 410), with the settings including an integrity switch state, tuning commands, and configuration settings. An input data processing function is then carried out (block 414), with the inputs (e.g., A429) being horizontal deviation signals, vertical deviation signals, and an optional digital integrity check. A determination is then made whether the converter unit is switched on (block 418). If not, the algorithm 400 exits the process (block 422). If the converter unit is switched on, a horizontal localizer deviation signal is converted to localizer Difference in Depth Modulation (DDM) signals (block 426), and a vertical glideslope deviation signal is converted to glideslope DDM signals (block 430). The DDM signals are a measurement of deviation from the center of the desired path (to the runway centerline in the case of localizer signals and to the runway touchdown point in the case of glideslope signals).

The algorithm 400 then optionally compares the localizer and glideslope deviation signals to an integrity check (block 434). A determination is made whether the localizer deviation signal integrity is good (block 438). If not, the failed localizer deviation signal is reported (block 442), and algorithm 400 exits the localizer calculation (block 446). If the localizer deviation signal integrity is good, the DDMs of the localizer deviation signal are converted to equivalent localizer tones (digital), which are output to a digital direct synthesizer (block 450). The algorithm 400 then exits the localizer calculation (block 446). A determination is also made whether the glideslope deviation signal integrity is good (block 454). If not, the failed glideslope deviation signal is reported (block 458) and algorithm 400 exits the glideslope calculation (block 462). If the glideslope deviation signal integrity is good, the DDMs of the glideslope deviation signal are converted to equivalent glideslope tones (digital), which are output to another digital direct synthesizer (block 466). The algorithm 400 then exits the glideslope calculation (block 462). It should be noted that as the integrity check is optional, in the case when the integrity check is not performed, the conversion steps are still always performed.

A computer or processor used in the present system and method can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present system and method.

The present method can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the method described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact discs, DVDs, Blu-ray discs, or other optical storage media; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

### Example Embodiments

Example 1 includes a system comprising: a global navigation satellite system (GNSS) unit onboard an aircraft, the GNSS unit operative to generate horizontal and vertical deviation signals for the aircraft; a converter unit onboard the aircraft and in operative communication with the GNSS unit; and a radio navigation computer onboard the aircraft and in operative communication with the converter unit; wherein the converter unit comprises a processor operative to execute instructions to perform a method for converting the horizontal and vertical deviation signals to equivalent very high frequency (VHF) instrument landing system signals, the method comprising: receiving the horizontal and vertical deviation signals from the GNSS unit; deriving signal modulations based on the horizontal and vertical deviation signals to produce localizer digital signals and glideslope digital signals; converting the localizer digital signals to a VHF localizer analog signal; converting the glideslope digital signals to a VHF glideslope analog signal; optionally performing an integrity check of the VHF localizer analog signal; optionally performing an integrity check of the VHF glideslope analog signal; performing high integrity switching between the VHF localizer and VHF glideslope analog signals, and the horizontal and vertical deviation signals; and outputting the VHF localizer analog signal and the VHF glideslope analog signal to the radio navigation computer.
Example 2 includes the system of Example 1, wherein the GNSS unit comprises a global positioning system (GPS) unit.
Example 3 includes the system of any of Examples 1-2, further comprising an onboard navigator unit in operative communication with the GNSS unit, the navigator unit configured to supply approach data to the GNSS unit.
Example 4 includes the system of Example 3, wherein the GNSS unit provides receiver autonomous integrity monitoring (RAIM) or wide area augmentation system (WAAS) integrity signals to the navigator unit.
Example 5 includes the system of any of Examples 1-4, wherein the converter unit includes a receiver configured to receive the horizontal and vertical deviation signals from the GNSS unit.
Example 6 includes the system of Example 5, wherein the processor comprises a microprocessor operative to receive the horizontal and vertical deviation signals from the receiver.
Example 7 includes the system of Example 6, wherein the microprocessor is operative to derive signal modulations, from the horizontal and vertical deviation signals, comprising 90 Hz and 150 Hz modulation signals.
Example 8 includes the system of any of Examples 6-7, wherein the microprocessor is operative to perform integrity checking of the horizontal and vertical deviation signals.
Example 9 includes the system of any of Examples 6-8, further comprising: a first digital direct synthesizer operative to receive digital localizer signals output from the microprocessor; and a second digital direct synthesizer operative to receive digital glideslope signals output from the microprocessor; wherein the first and second digital direct synthesizers each respectively include an internal digital to analog converter (DAC).
Example 10 includes the system of Example 9, wherein the digital localizer signals include 90 Hz and 150 Hz localizer signals; and the digital glideslope signals include 90 Hz and 150 Hz glideslope signals.
Example 11 includes the system of any of Examples 9-10, further comprising a timing source operative to send timing signals to each of the first and second digital direct synthesizers, the timing source configured to receive tuning commands including localizer and glideslope channel selections.
Example 12 includes the system of any of Examples 9-11, further comprising a high integrity switch operative to receive an analog localizer signal output by the first digital direct synthesizer; and an analog glideslope signal output by the second digital direct synthesizer.
Example 13 includes the system of Example 12, further comprising a localizer antenna and a glideslope antenna operatively coupled to the converter unit through the high integrity switch, wherein the localizer antenna provides a VHF horizontal deviation signal, and the glideslope antenna provides a VHF vertical deviation signal.
Example 14 includes the system of any of Examples 12-13, wherein the radio navigation computer is configured to receive a final localizer signal and a final glideslope signal output from the high integrity switch.
Example 15 includes the system of any of Examples 12-14, further comprising a display/controller unit in operative communication with the converter unit, the display/controller unit configured to receive an integrity status signal from the microprocessor unit; and send an approach mode selection signal to the high integrity switch.
Example 16 includes the system of any of Examples 9-15, further comprising a first demodulator operative to receive the analog localizer signal output by the first digital direct synthesizer, the first demodulator including an analog to digital converter (ADC) that converts the analog localizer signal to a first digital integrity check signal, which is sent to the microprocessor.
Example 17 includes the system of Example 16, further comprising a second demodulator operative to receive the analog glideslope signal output by the second digital direct synthesizer, the second demodulator including an ADC that converts the analog glideslope signal to a second digital integrity check signal, which is sent to the microprocessor.
Example 18 includes a method for converting horizontal and vertical deviation signals to equivalent VHF instrument landing system signals, the method comprising: receiving horizontal and vertical deviation signals from a GPS unit; deriving signal modulations based on the horizontal and vertical deviation signals to produce localizer digital signals and glideslope digital signals; converting the localizer digital signals to VHF localizer analog signals; converting the glideslope digital signals to VHF glideslope analog signals; performing an integrity check of the VHF localizer analog signals; performing an integrity check of the VHF glideslope analog signals; performing high integrity switching between the VHF localizer and VHF glideslope analog signals, and the horizontal and vertical deviation signals; and outputting the VHF localizer and VHF glideslope analog signals to a radio navigation computer.
Example 19 includes the method of Example 18, wherein the digital localizer signals include 90 Hz and 150 Hz localizer signals; and the digital glideslope signals include 90 Hz and 150 Hz glideslope signals.
Example 20 includes the method of any of Examples 18-19, wherein deriving signal modulations based on the horizontal and vertical deviation signals comprises converting the horizontal deviation signal to localizer difference in depth modulation (DDM) signals; and converting the vertical deviation signal to glideslope DDM signals.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
a global navigation satellite system (GNSS) unit onboard an aircraft, the GNSS unit operative to generate horizontal and vertical deviation signals for the aircraft;
a converter unit onboard the aircraft and in operative communication with the GNSS unit; and
a radio navigation computer onboard the aircraft and in operative communication with the converter unit;
wherein the converter unit comprises a processor operative to execute instructions to perform a method for converting the horizontal and vertical deviation signals to equivalent very high frequency (VHF) instrument landing system signals, the method comprising:
receiving the horizontal and vertical deviation signals from the GNSS unit;
deriving signal modulations based on the horizontal and vertical deviation signals to produce localizer digital signals and glideslope digital signals;
converting the localizer digital signals to a VHF localizer analog signal;
converting the glideslope digital signals to a VHF glideslope analog signal;
optionally performing an integrity check of the VHF localizer analog signal;
optionally performing an integrity check of the VHF glideslope analog signal;
performing high integrity switching between the VHF localizer and VHF glideslope analog signals, and the horizontal and vertical deviation signals; and
outputting the VHF localizer analog signal and the VHF glideslope analog signal to the radio navigation computer.

2. The system of claim 1, further comprising an onboard navigator unit in operative communication with the GNSS unit, the navigator unit configured to supply approach data to the GNSS unit;
wherein the converter unit includes a receiver configured to receive the horizontal and vertical deviation signals from the GNSS unit.

3. The system of claim 2, wherein the processor comprises a microprocessor operative to receive the horizontal and vertical deviation signals from the receiver.

4. The system of claim 3, wherein the microprocessor is operative to derive signal modulations, from the horizontal and vertical deviation signals, comprising 90 Hz and 150 Hz modulation signals.

5. The system of claim 3, wherein the microprocessor is operative to perform integrity checking of the horizontal and vertical deviation signals.

6. The system of claim 3, further comprising:
a first digital direct synthesizer operative to receive digital localizer signals output from the microprocessor; and
a second digital direct synthesizer operative to receive digital glideslope signals output from the microprocessor;
wherein the first and second digital direct synthesizers each respectively include an internal digital to analog converter (DAC).

7. The system of claim 6, further comprising a high integrity switch operative to:
receive an analog localizer signal output by the first digital direct synthesizer;
and an analog glideslope signal output by the second digital direct synthesizer.

8. The system of claim 7, further comprising a localizer antenna and a glideslope antenna operatively coupled to the converter unit through the high integrity switch, wherein the localizer antenna provides a VHF horizontal deviation signal, and the glideslope antenna provides a VHF vertical deviation signal.

9. The system of claim 7, further comprising:
a first demodulator operative to receive the analog localizer signal output by the first digital direct synthesizer, the first demodulator including an analog to digital converter (ADC) that converts the analog localizer signal to a first digital integrity check signal, which is sent to the microprocessor; and
a second demodulator operative to receive the analog glideslope signal output by the second digital direct synthesizer, the second demodulator including an ADC that converts the analog glideslope signal to a second digital integrity check signal, which is sent to the microprocessor.

10. A method for converting horizontal and vertical deviation signals to equivalent very high frequency (VHF) instrument landing system signals, the method comprising:
receiving horizontal and vertical deviation signals from a global positioning system (GPS) unit;
deriving signal modulations based on the horizontal and vertical deviation signals to produce localizer digital signals and glideslope digital signals;
converting the localizer digital signals to VHF localizer analog signals;
converting the glideslope digital signals to VHF glideslope analog signals;
performing an integrity check of the VHF localizer analog signals;
performing an integrity check of the VHF glideslope analog signals;
performing high integrity switching between the VHF localizer and VHF glideslope analog signals, and the horizontal and vertical deviation signals; and
outputting the VHF localizer and VHF glideslope analog signals to a radio navigation computer.
